(19) Europäisches Patentamt
European Patent Office
Office européen des brevets

(11) **EP 2 993 627 A1**

(12) **EUROPEAN PATENT APPLICATION**

(43) Date of publication:
**09.03.2016 Bulletin 2016/10**

(51) Int Cl.:
**G06Q 10/00** *(2012.01)*

(21) Application number: **14290266.7**

(22) Date of filing: **05.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Amadeus S.A.A.**
**06410 Biot (FR)**

(72) Inventors:
• **Boudia, Mourad**
**06600 Antibes (FR)**

• **Acuna Agost, Rodrigo**
**06220 Le Golfe Juan (FR)**
• **Chatrain, Baptiste**
**06250 Mougins (FR)**
• **Delahaye, Thierry**
**06000 Nice (FR)**

(74) Representative: **Samson & Partner Patentanwälte mbB**
**Widenmayerstraße 6**
**80538 München (DE)**

(54) **Flight schedule optimization**

(57) Methods, systems, and computer program products for optimizing schedules for a plurality of flights in a network of flights. The schedules for the flights may be received. In general, the schedules indicate, for each flight, a departure point, an arrival point, a departure time, and an arrival time. The schedules may be globally optimized to identify one or more schedule adjustments for one or more of the flights that results in an increase in a schedule connection value associated with the schedules, where the global optimization is based at least in part on one scheduling rule that constrains combinability of the flights in the network of flights.

FIG. 1

**Description**

Background

The invention is generally related to computers and computer software, and in particular to methods, systems, and computer program products for flight schedule planning.

In general, flight scheduling is an early step in airline operations. Flight schedules are often used to determine fleet assignment, tail assignment, and/or crewing for flights offered by an airline. Therefore, flight schedule quality may be an important factor in profitability and operation reliability. Computer technology is increasingly used in the travel industry to manage and support airline operations, as well as data associated therewith. In particular, flight schedules for a network of flights provided by airlines may be created, managed, and shared among various interested parties (e.g., airlines, airports, governmental entities, etc.) with computer based data processing systems.

Because computer technology is utilized to increasingly manage and support airline operations, and in particular flight schedules, a continuing need exists in the art for improved computer based flight scheduling and management systems to thereby improve airline efficiency and/or revenue, as well as improved methods and computer program products for facilitating the generation and management of flight schedules.

Summary

Embodiments of the invention generally comprise methods, systems, and computer program products for optimizing the schedules of a plurality of flights in a network of flights. Consistent with embodiments of the invention, the schedules for the flights may be received. In general, the schedules indicate, for each flight, a departure point, an arrival point, a departure time, and an arrival time. The schedules may be globally optimized to identify one or more schedule adjustments for one or more of the flights that results in an increase in a schedule connection value associated with the schedules, where the global optimization is based at least in part on one scheduling rule that constrains combinability of the flights in the network of flights.

Brief Description of the Several Views of the Drawings

The accompanying drawings, which are incorporated in and constitute a part of this specification, illustrate various embodiments of the invention and, together with a general description of the invention given above and the detailed description of the embodiments given below, serve to explain the embodiments of the invention.

FIG. 1 is a block diagram of a data processing system consistent with embodiments of the invention.
FIG. 2 is a flowchart illustrating a sequence of operations that may be performed by the system of FIG. 1 to globally optimize schedules for flights of a network of flight onsistent with some embodiments of the invention.
FIG. 3 is a flowchart illustrating a sequence of operations that may be performed by the system of FIG. 1 to identify and implement one or more schedule adjustments for schedules of flights of a network of flights consistent with some embodiments of the invention.
FIG. 4 provides an illustration of an example of flight schedules and the adjustment thereof that may be performed by the data processing system of FIG. 1.
FIGS. 5A-B provides an illustration of an example flight schedule and an example optimized flight schedule that may be generated by the data processing system of FIG. 1.
FIG. 6A-C provides an illustration of an example flight schedule and example optimized flight schedules that may be generated by the data processing system of FIG. 1.

Detailed Description

Embodiments of the invention provide systems, methods, and computer program products for optimizing schedules of a network of flights, which may be referred to as flight schedules. In general, schedules for a network of flights may be received. For each flight, a departure point, an arrival point, a departure time, and an arrival time is indicated. Embodiments of the invention analyze the schedule of flights to identify potential connections that are not supported by the schedules of the network of flights, where the potential connections may be supported by one or more schedule adjustments to one or more flights of the network of flights. A connection generally refers to a combination of at least two flights (where each flight of the combination is referred to as a leg) such that an arrival point (i.e., airport) of a first flight corresponds to departure point (i.e., airport) of a second flight, such that a departure point of the first flight corresponds to an origin and the arrival point of the second flight correspond to a destination for an origin and destination pair. In turn, a potential connection generally refers to a connection between two flights that is not supported by the flight schedules but that may be supported by one or more schedule adjustments.

A schedule adjustment may comprise an adjustment for a departure time of the flight, an adjustment for an arrival time of the flight, cancellation of a flight, and/or other such adjustments that may be made to a schedule of the flight. Based on the one or more potential connections and the one or more corresponding schedule adjustments, the schedules of the network of flights may be globally optimized to increase a schedule connection value associated with the schedules of the network of flights. The schedule connection value generally corresponds to the connectivity of the flight schedules. Hence, the schedule connection value of the schedules of the network of flights may be increased by supporting more connections and/or by supporting more valuable connections. Embodiments of the invention analyze flight schedules to determine whether connections may be increased and/or the value of connections may be increased, which may thereby offer air travel to more origin and destination pairs and/or offer more air travel options for higher value origin and destination pairs. In general, global optimization of the flight schedules may be constrained by one or more scheduling rules and/or one or more operational constraints. Scheduling rules generally define limitations that should be adhered to when scheduling, such as minimum connection times for airports, maximum connection times for airports and/or airline providers, flight duration, etc. Operational constraints generally correspond to equipment and/or personnel limitations that should be respected when scheduling flights.

To evaluate a schedule connection value (also referred to as schedule connectivity), an average and/or total number of accessible destinations with one, two, and three legs may be determined. Whether a connection is supported may be based at least in part on whether the arrival airport of a first flight corresponds to a departure airport of a second flight. Furthermore, whether a connection is supported may be based at least in part on a scheduling rule that defines a scheduling time window, where the scheduling time window generally corresponds to an arrival of a first flight and a departure of a second flight. A scheduling time window may define a minimum connection time and a maximum connection time. Generally, a scheduling time window may be based at least in part on an airport, terminal, airline, type of flight, and/or other such factors. Each connection and/or potential connection may be evaluated to determine a connection value, where the connection value may be based at least in part on a quality of the connection. The quality of the connection may be based at least in part on how a resulting itinerary comprising the connection compares to a direct flight for the same origin and destination in regard to time and cost. The connection value may be based at least in part on a market size of an origin and destination associated with the connection. In addition, a connection value may be based at least in part on a number of existing connections for the associated origin and destination already offered by the air travel provider. The schedule connection value may be based at least in part on a connection value of each connection supported by the flight schedules. In some embodiments the schedule connection value is a sum of the connection values of each connection supported by the flight schedules.

Embodiments of the invention may optimize flight schedules based at least in part on connectivity of the flight schedules. As discussed, connectivity of the flight schedules may generally be evaluated based on the schedule connection value of the flight schedules, where the schedule connection value of the flight schedules may be based on a connection value associated with each connection supported by the flight schedules. Connectivity of the flight schedules may be based at least in part on a number of connections supported by the flight schedules and/or a connection value associated with connections supported by the flight schedules. In some embodiments, connections may be equally valued, while in other embodiments, a connection value for a connection may be based on an associated market size, an associated revenue value, an associated competition value, and/or other such qualities upon which a connection and an associated origin and destination pair may be evaluated. Hence, embodiments of the invention may optimize flight schedules by implementing one or more schedule adjustments that increase the schedule connection value, where increasing the schedule connection value may be accomplished by increasing connections supported by the flight schedules and/or increasing connection values associated with connections supported by the flight schedules. Furthermore, for optimization, in some embodiments, all existing connections are maintained during optimization, while in other embodiments, existing connections may be broken such that overall connectivity may be increased.

In general, optimization of the flight schedules may include modeling the flight schedules to increase and/or maximize the schedule connection value of the flight schedules. Therefore, global optimization may be represented by the following equation:

$$(1) \qquad Max \sum_{(f_i, f_j) \in K_f} b_{ij} \cdot z_{ij}.$$

As discussed, global optimization may be limited due to scheduling rules, operational constraints, and/or other such limitations. In this regard, equation (1) may be subject to and/or constrained by the following equations:

$$(2) \quad y_i \leq x_j - mct_{arri} \cdot z_{ij} + M \cdot \left(1 - z_{ij}\right), \quad \forall \left(f_i, f_j\right) \in K_f$$

$$(3) \quad y_i = x_i + d_i, \qquad\qquad \forall f_i \in F$$

$$(4) \quad -\Delta_i \leq x_i - x_i^0 \leq \Delta_i, \qquad\qquad \forall f_i \in F$$

$$(5) \quad dep_i - dep_j - M \cdot o_{ij} < 0, \qquad \forall \left(f_i, f_j\right) \in F$$

$$(6) \quad init_{dep_i} + \sum_{(f_i, f_j) \in K_f} z_{ij} - \sum_{(f_i, f_j) \in O_f} o_{ij} \geq 1, \qquad \forall f_i \in F$$

$$(7) \quad \sum_{a \in C} init_a = A_0$$

$$(8) \quad z_{ij} \in {0, 1}, \qquad\qquad \forall \left(f_i, f_j\right) \in K_f$$

$$(9) \quad y_i \geq 0, x_i \geq 0, \qquad\qquad \forall f_i \in F.$$

$$(10) \quad o_{ij} \in {0, 1}, \qquad\qquad \forall \left(f_i, f_j\right) \in K_f.$$

In the model defined by equations (1)-(9), F corresponds to flights of the network of flights, and C corresponds to airports associated with the flights. Each airport $c \in$ C may be associated with a minimum connection time $mct_c$ for passengers. For the flights, $\forall f_1 \in F$, the initial (i.e., scheduled before optimization) departure times and arrival times may be represented as $x_i^0$ and $y_i^0$, and $d_i$ corresponds to a duration of a flight, such that $f_i : y_i^0 = x_i^0 + d_i$. Departure and arrival airports of $f_i \in F$ correspond to $dep_i$ and $arr_i$, which are included in C. The allowable scheduled departure and arrival time displacement/adjustment may be represented as $\forall f_i \in F$, $\Delta_i$, and M may be a predetermined constant. Furthermore, for flights $\forall f_i \in F$ new departure and arrival times (e.g., identified schedule adjustments) may be represented by $x_i$ and $y_i$. A connection between flights (e.g., legs of the connection) $f_i$ and $f_j$ is feasible (e.g., supported) if $dep_j = arr_i$ and $y_i \leq x_j - mct_{arri}$. A binary variable $z_{ij}$ may equal 1 if a connection between $f_i$ and $f_j$ is supported/feasible, and $z_{ij}$ may be 0 otherwise. A connection benefit (e.g., a connection value) may be represented by $b_{ij}$, where in embodiments of the invention where all connections are equivalent, $b_{ij}$ will be equal to 1. An order variable $o_{ij}$ may be equal to 1 if $dep_i > dep_j$, and may be equal to 0 otherwise. Potentially feasible connections (e.g., potential connections) may be represented by $K_f \subset F^2$, and $(f_i, f_j) \in K_f$ if and only if $dep_j = arr_i$. Similarly, flights departing from the same airport may be represented by $0_f \subset F^2$, and $(f_i, f_j) \in O_f$ if and only if $dep_j = dep_i$. A total number of aircraft may be represented by $A_0$. A number of existing connections (i.e., initially supported/feasible connections) may be represented by $K_0$, and a number of aircraft present at the beginning of a day of operations at airport $a$ may be represented by $init_a$.

Based on the above described model, a number of valid connections (e.g., supported connections) may be maximized. In some embodiments, a connection value of each valid connection may be determined based at least in part on an associated origin and destination pair. With regard to a supported connection and equation (2) (also referred to as validity and/or feasibility), given the model parameters described above, a connection may be supported if a minimum connection time of an associated airport is respected. In this regard, if the minimum connection time is respected, $z_{tj}$ will be equal to 1, and the constant M may be eliminated by the factor ($1 - z_{ij}$). If a minimum connection time is not respected, $z_{ij}$ will be equal to 0, and the constraint $y_i \le x_j$ - M may remain valid due to the constant M.

Equation (3) enforces flight duration scheduling rules (e.g., air travel provider and/or regulated maximum flight duration limits) and/or operational constraints (e.g., maximum flight duration operational limitations). Equation (4) may limit and control departure and arrival time displacements (e.g., schedule adjustments); with regard to schedule adjustments for a flight, time displacement limitations may be defined by one or more scheduling rules associated with the flight. For example, a scheduling rule may indicate that a maximum displacement for a particular flight is zero minutes, which indicates that the schedule of the flight cannot be adjusted. As another example, one or more scheduling rules may indicate that a maximum displacement for a particular flight is 10 minutes, which indicates that a departure and/or arrival time of the particular flight may be adjusted from 10 minutes earlier to 10 minutes later than the scheduled time.

Equation (5) implements order structure into the model. If a flight $f_i$ departs after a flight $f_j$, then the first two terms of the constraining equation (5) will correspond to a positive value. The variable $o_{ij}$ then needs to be equal to 1, so that the left hand term can be negative. If flight $f_i$ departs before flight $f_j$, the variable $o_{ij}$ may be equal to 0 or 1; where $o_{ij}$ may be set to 0 based on equation (6). Therefore, the constant M should be determined such that a negative left hand side of equation (5) may be possible by setting $o_{ij}$ to 1. For example, the constant M may be determined to be a value larger than the duration of a planning window. As such, $o_{ij}$ may generally be equal to 1 when flight $f_i$ departs after a flight $f_j$. Equation (6) constrains the model such that at least one aircraft is available for each scheduled flight. For each flight $f_i$ the initial number of aircraft at the station $dep_i$, plus the number of arrivals successfully connecting to $f_i$, and minus the number of flights departing from $dep_i$ corresponds to the number of available aircraft at the time of departure of $f_i$. In general, the available aircraft should be equal to at least 1. Constraining equation (6) expresses this general parameter - the first term corresponds to the initial number of aircraft, the second term corresponds to the number of connections, and the third term corresponds to the number of aircraft departing before $f_i$. If $o_{ij}$ variables may be set to 0 or 1 (as explained above), it is possible here to set all $o_{ij}$ variables to 0.

Equation (7) constrains the model by enforcing that the total number of aircraft required by an optimized schedule is at most equal to the fleet size - at most the sum of aircraft initially present at each airport according to a schedule (e.g., an optimized schedule) should be less than or equal to the fleet size. Equations (8), (9) and (10) generally define a domain of decision variables. Furthermore, in embodiments of the invention in which existing connections are maintained, the model may be subject to the following additional equation:

$$(10) \quad z_{ij} = 1, \qquad \forall \left( f_i, f_j \right) \subset K_0.$$

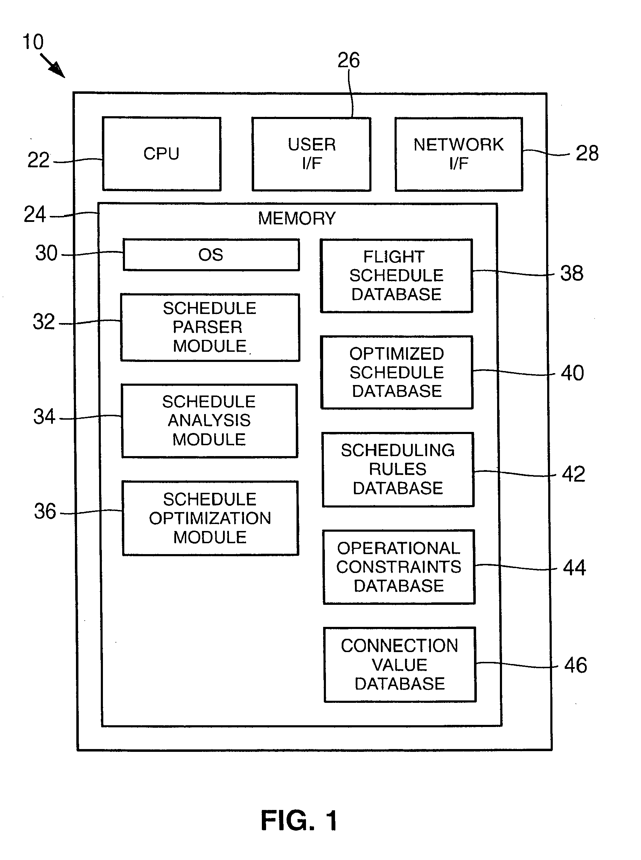

Turning now to the figures and particularly to FIG. 1, this figure provides a block diagram illustrating components of a data processing system 10 consistent with some embodiments of the invention. As shown, the data processing system 10 includes at least one processor 22 including at least one hardware-based microprocessor and a memory 24 coupled to the at least one processor 22. The memory 24 may represent the random access memory (RAM) devices comprising the main storage of the data processing system 10, as well as any supplemental levels of memory, e.g., cache memories, non-volatile or backup memories (e.g., programmable or flash memories), read-only memories, etc. In addition, memory 24 may be considered to include memory storage physically located elsewhere in the data processing system 10, e.g., any cache memory in a microprocessor, as well as any storage capacity used as a virtual memory, e.g., as stored on a mass storage device or on another computer coupled to the data processing system 10.

For interface with a user or operator, the data processing system 10 may include a user interface 26 incorporating one or more user input/output devices, e.g., a keyboard, a pointing device, a display, a printer, etc. Otherwise, data may be communicated to and from another computer or terminal over a network interface 128 coupled to a communication network (e.g., the Internet, a local area network, a wide area network, a cellular voice/data network, one or more high speed bus connections, and/or other such types of communication networks). The data processing system 10 also may be in communication with one or more mass storage devices, which may be, for example, internal hard disk storage devices, external hard disk storage devices, external databases, storage area network devices, etc.

The data processing system 10 typically operates under the control of an operating system 30 and executes or otherwise relies upon various computer software applications, components, programs, objects, modules, engines, data structures, etc., including for example, a schedule parser module 32, a schedule analysis module 34, and a schedule optimization module 36. In general, the schedule parser module 32 may be configured to receive and parse schedules for a network of flights. The schedule analysis module 34 may be configured to analyze the schedules for the network of flights and determine supported connections and/or one or more potential connections. The schedule optimization module 36 may be configured to globally optimize the schedules of the network of flights based on the one or more potential connections to increase a schedule connection value for the schedules of the network of flights.

Moreover, various applications, components, programs, objects, modules, engines etc. may also execute on one or more processors in another computer coupled to the data processing system via a communication network, e.g., in a distributed or client-server computing environment, whereby the processing required to implement the functions of a computer program may be allocated to multiple computers over a network. For example, some of the functionality described herein as being incorporated into the data processing system 10 and/or modules 32-26 of the data processing system 10 may be implemented in one or more servers. Consistent with embodiments of the invention, the modules 32-36 and/or other such modules/applications may be executing on one or more servers of the data processing system 10, and the modules 32-36 may cause the processor 22 of the data processing system 10 to perform operations consistent with embodiments of the invention.

The memory 24 of the data processing system 102 may generally store one or more databases including, for example, a flight schedule database 38, an optimized schedule database 40, a scheduling rules database 42, and an operational constraints database 44, and/or a connection value database 46. The databases 38-46 may comprise data and supporting data structures that store and organize the data. In particular, the databases 38-46 may be arranged with any database organization and/or structure including, but not limited to, a relational database, a hierarchical database, a network database, and/or combinations thereof. A database management system in the form of a computer software application executing as instructions on a processing unit of the data processing system 10 may be used to access the information or data stored in records of the databases 38-46 in response to a query, where a query may be dynamically determined and executed by the operating system 30, other applications, and/or one or more modules 32-36.

The flight schedule database 38 may store schedules for flights of the network of flights, including schedule information such as a departure point, an arrival point, a departure time, and an arrival time for each flight of the network of flights. Consistent with embodiments of the invention, the schedule optimization module 36 may retrieve the stored schedule information and parse the schedules prior to determine the departure point, the arrival point, the departure time, and the arrival time for each flight of the network of flights. The scheduling rules database 42 may store scheduling rules associated with the schedules of the network of flights. For example, the scheduling rules database 42 may store, for the flights of the network of flights, minimum connection values for airports and/or types of flights (e.g., domestic, international, etc.), maximum connection values for airports and/or types of flights, maximum adjustment values for flights, and/or types of flights, maximum flight duration values, and/or other such information that may be relevant to flight scheduling. In general, a user may input one or more scheduling rules via a graphical user interface generated by the data processing system 10, and the scheduling rules may be stored in the scheduling rules database 42.

The operational constraints database 44 may store operational constraints and/or information for providers of the flights of the network of flights. For example, the operational constraints database 44 may store aircraft fleet information, personnel information, and/or other such operational information that may constrain adjustment of a schedule of a flight. Such operational constraints may be generally referred to as flow conservation. Flow conservation generally corresponds to a balance between departing and arriving aircraft and available aircraft crews at a given airport at a given time of day. Generally, embodiments of the invention may adjust flight schedules within bounds constrained by relevant operational constraints. For example, schedule adjustments for the flight schedules ensure that a total number of aircraft departing an airport is less than or equal to a total number of aircraft landing and/or already present at the airport. Moreover, a fleet size may be considered an operational constraint, and embodiments of the invention may adjust flight schedules only to the extent that the total number of aircraft used to cover optimized schedules may not exceed a total number of available aircraft.

The connection value database 46 generally stores information that may be used to determine connection values for evaluating supported connections and potential connections for the schedules of the network of flights. For example, the connection value database 46 may store revenue information for locations and/or flights, connection value information for locations and/or flights, market value information for locations, partnership arrangements between air travel providers (e.g., interlined air travel agreements), and/or other such values that may be relevant to a schedule for a flight. In general, the connection value related information stored in the connection value database 46 may be updated by an airline or a third party that collects and analyzes such data, such that evaluation of a current connection (i.e., a connection supported by the schedules) and a potential connection (i.e.,. a connection that may be supported by the schedules with one or more schedule adjustments) may be performed with up to date valuation data.

The schedule analysis module 34 may retrieve one or more scheduling rules from the scheduling rules database 42 and/or one or more operational constraints associated with one or more of the flights of the network of flights to identify one or more potential connections that may be supported by the schedules of the network of flights with one or more schedule adjustments. The schedule optimization module 36 may make one or more schedule adjustments to the schedules of one or more flights of the network of flights based on the potential connections, one or more scheduling rules, connection value information, and/or one or more operational constraints to increase a schedule connection value of the schedules of the network of flights to thereby optimize the schedules for the network of flights. The schedule optimization module 36 may store the optimized schedules in the optimized schedule database 40.

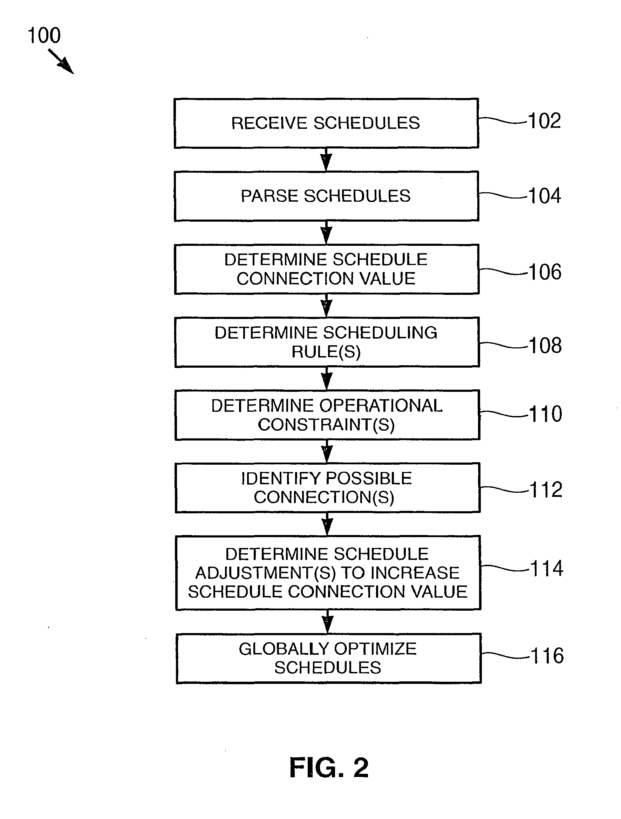

FIG. 2 provides a flowchart 100 that illustrates a sequence of operations that may be performed by the data processing system 10 of FIG. 1 to optimize schedules for a network of flights. The data processing system 10 may receive schedules for the flights of the network of flights (block 102) (i.e., flight schedules). The data processing system 10 parses the schedules to determine the departure point, arrival point, departure time, and arrival time for each flight of the network of flights (block 104). In general, the received schedules for the network of flights may be stored in a standardized format, such as a standardized format defined by the International Air Transport Association (IATA). For example, the schedules for the network of flights stored in the flight schedule database may correspond to a format defined by the IATA *Standard Schedules Information Manual.*

A schedule connection value may be determined for the schedules of the network of flights based on a connection value of each flight of the network of flights (block 106). In general, a connection value for a flight may be based at least in part on a value of a location associated with the flight (e.g., a departure point, and arrival point, an origin for a combination of flights, a destination for a combination of flights, etc.). A value of a location may be a market value for the location, a revenue value for offering a flight to the location, a competition value for offering a flight to the location, etc. Connection value related information may be stored in a connection value database 46. For example, if a first flight may be combined with a second flight (according to the respective schedules) for a first connection to offer travel from a particular origin to a particular destination that is not supported by other flights for an airline provider, the market value for the first connection (and the first flight and second flight) may be higher relative to market values for other connections and associated flights.

The data processing system 10 determines one or more scheduling rules associated with the schedules of the flights of the network of flights (block 108). For example, the data processing system 10 may determine minimum connection values for airports corresponding to flights of the network of flights. The data processing system 10 determines one or more operational constraints associated with the flights of the network of flights (block 110). For example, the data processing system may determine a number of available aircraft for an airline at an airport. Based on the schedules of the network of flights, the one or more scheduling rules, and/or the one or more operational constraints, the data processing system 10 determines potential connections that may be supported by the schedules of the flights of the network of flights with one or more schedule adjustments (block 112). In general, potential connections correspond to flights that may be combined based on the one or more scheduling rules and/or the one or more operational constraints. As discussed, one or more schedule adjustments may correspond to a potential connection. A schedule adjustment may comprise a time adjustment for a departure time, a time adjustment for an arrival time, an addition of a new flight, cancellation of a flight, a cancellation of a flight such that the schedules support an added flight, and/or other such types of adjustments/modifications that may be implemented for the schedules of the flights of the network of flights.

As discussed, embodiments of the invention globally optimize the schedules of the flights of schedules by increasing a schedule connection value for the schedules of the flights of the network of flights. In some embodiments, the schedule connection value for the schedules of the flights may correspond to a number of combinations of flights supported by the schedules. In these embodiments, the schedules of the network of flights may be globally optimized by increasing the number of combinations of flights supported by the schedules. In some embodiments, the schedule connection value for the schedules of flights may correspond to a value (such as a monetary value, a market size based value, a competition based value, etc.) of the combinations of flights supported by the schedules. In these embodiments the schedules of the network of flights may be globally optimized by increasing the schedule connection value. Hence, in some embodiments the global optimization may decrease the number of connections supported by the schedules, but the value of the connections supported may be increased. For example, one or more flights associated with connections having a low average revenue may be cancelled such that an alternative flight associated with a connection having a higher average revenue may be supported. Therefore, the data processing system determines one or more schedule adjustments to increase the schedule connection value for the schedules of the network of flights (block 114), and the data processing system globally optimizes the schedules of the flights of the network of flights by implementing the one or more schedules adjustments to thereby increase the schedule connection value of the schedules of the flights of the network of flights (block 116). When analyzing the flight schedules, embodiments of the invention consider ranges of departure and/or arrival times possible for each flight, flow conservation at each airport, and connection values for potential connections and/or current connections to determine schedule adjustments that increase connectivity and/or connection value (i.e., a schedule connection value) for the flight schedules for the network of flights.

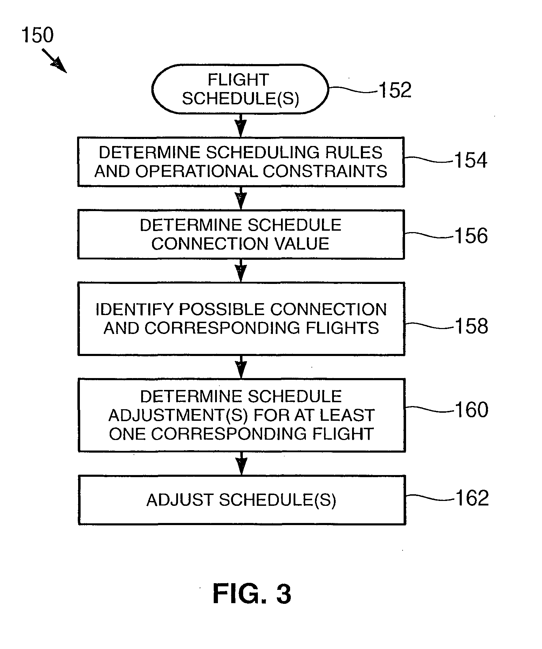

Turning now to FIG. 3, this figure provides a flowchart 150 that illustrates a sequence of operations that may be performed by the data processing system 10 consistent with some embodiments of the invention to determine a schedule adjustment from schedules for flights of a network of flights (block 152) and implement one or more schedule adjustments to one or more schedules. The data processing system 10 determines one or more scheduling rules, one or more operational constraints corresponding to the flight schedules (block 154). As discussed the scheduling rules may include scheduling rules associated with airports, flights, types of flights, airlines, partner airline arrangements, and/or other such factors that may be considered when analyzing the flight schedules. Similarly, the operational constraints associated with the flight schedules may correspond to aircraft and personnel resource allocation and availability.

As discussed, revenue values, market size values, and/or competition values may be stored in a connection value database. Based on connection values for connections supported by the flight schedules, the data processing system 10 may determine a schedule connection value that corresponds to a global schedule connection value for the flight schedules (block 156).

Based on the scheduling rules, the operational constraints, and/or the schedule connection value, the data processing system 10 may analyze the flight schedules to identify a potential connection, one or more flights corresponding to the potential connections (block 158), and one or more schedule adjustments for the one or more corresponding flights (block 160). Therefore, for each potential connection, the data processing system 10 determines flights corresponding to the potential connection, where the flights corresponding to the potential connection comprise flights that may be combined to support the potential connection as well as flights that may be affected by the potential connection (i.e., flights that may be cancelled and/or adjusted if the potential connection is to be supported by the flight schedule). A potential connection generally increases the schedule connection value for the flight schedules, and the one or more schedule adjustments are feasible (i.e., permitted) in view of the scheduling rules and/or operational constraints. The data processing system 10 may adjust one or more flight schedules based on the determined one or more schedules adjustments for the flights of the network of flights (block 162).

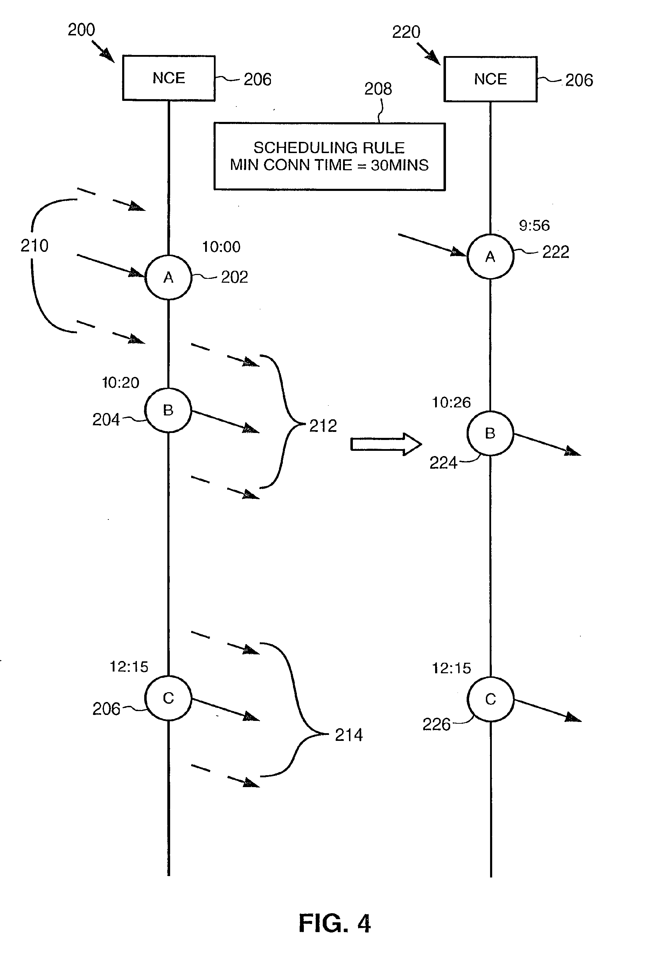

FIG. 4 provides a diagrammatic illustration of flight schedules 200 for three flights 210, 212, 214 (labeled 'A', 'B', and 'C') associated with an airport (NCE) 206. In this example, flight A 202 arrives at NCE 206 at 10:00; flight B departs NCE at 10:20; and flight C departs NCE at 12:15. As shown, a scheduling rule 208 corresponding to the NCE airport 206 indicates that a minimum connection value of 30 minutes is needed between arrival of a first flight and departure of a second flight to facilitate a connection. Therefore, based on the example scheduling rule 208, the flight schedules 200 support a connection that combines flight A 202 and flight C 206 because the arrival time of flight A 202 is more than 30 minutes before the departure time of flight C 206. However, based on the example scheduling rule 208, the flight schedules connection that combines flight A 202 and flight B 204 is not supported because the arrival time of flight A 202 is less than 30 minutes before the departure time of flight B 204.

In this example, the arrival and/or departure times for the flights 202, 204, 206 may be adjusted within a time window of 10 minutes earlier to 10 minutes later than the scheduled arrival/departure time (shown as the ranges 210, 212, 214 in FIG. 4). Consistent with an embodiment of the invention, the schedules of the flights 202, 204, 206 may be adjusted to increase a schedule connection value associated with the schedules. In this example, an additional connection may be supported by the schedules if the arrival time of flight A 202 and the departure time of flight B 204 are adjusted. In FIG. 4, optimized flight schedules 220 reflect schedule adjustments for flight A 222 and flight B 224, such that a connection combining flight A 222 and flight B 224 may be supported by the optimized flight schedules 220. As shown, an arrival time of flight A 222 has been adjusted to 9:56 and a departure time of flight B 224 has been adjusted to 10:26 to thereby meet the example scheduling rule 208.

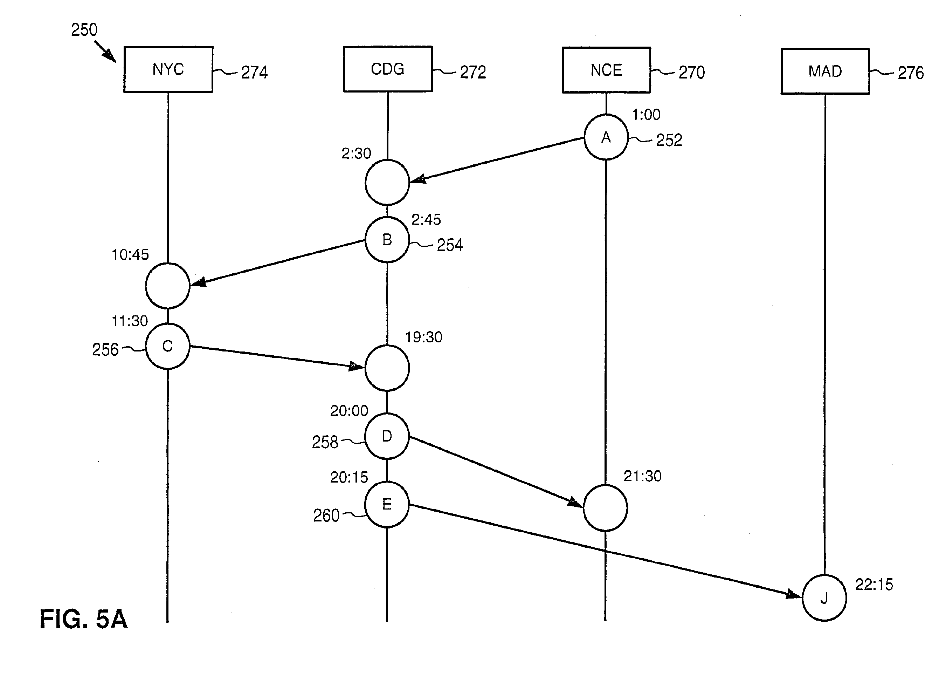

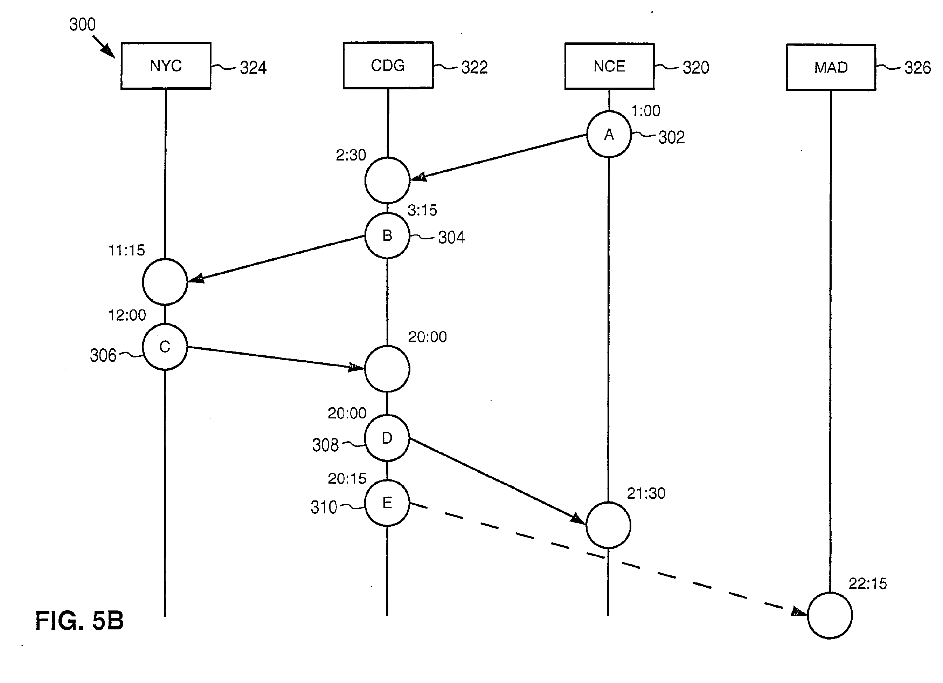

FIGS. 5A and 5B provide a diagrammatic illustration of example flight schedules. Referring to FIG. 5A, flight schedules 250 for five flights 252-260 are shown. As shown, flight A 252 departs from Nice, France (NCE) 270 at 1:00 and arrives at Paris, France (CDG) 272 at 2:30; flight B 254 departs from CDG 272 at 2:45 and arrives at New York City, New York (NYC) 274 at 10:45; flight C 256 departs from NYC at 11:30 and arrives at CDG 272 at 19:30; flight D departs CDG at 20:00 and arrives at NCE at 21:30; and flight E 260 departs CDG 272 at 20:15 and arrives at Madrid, Spain (MAD) 276 at 22:15. In this example, a scheduling rule may indicate that a minimum connection time of 45 minutes is required. Therefore, in this example, the flight schedules 250 support: a connection for the origin of NCE 270 and the destination of MAD 276 by combining flight A 252 and flight E 260; and a connection for the origin NYC 274 by combining flight C and flight E 260.

FIG. 5B provides an example optimization of the flight schedules of FIG. 5A. In this example, flight schedules 300 for five flights 302-310 are provided. As shown, flight A 302 departs from Nice, France (NCE) 320 at 1:00 and arrives at Paris, France (CDG) 322 at 2:30; flight B departs from CDG 322 at 3:15 and arrives at New York City, New York (NYC) 324 at 11:45; flight C departs from NYC 324 at 12:00 and arrives at CDG 322 at 20:00; flight D 308 departs CDG 322 at 20:00 and arrives at NCE 320 at 21:30; and flight E 310 departs CDG 322 at 20:15 and arrives in Madrid, Spain (MAD) 326 at 22:15. Therefore, as compared to the flight schedules of FIG. 5A: a schedule adjustment has been implemented for flight B 304 such that flight B 304 departs CDG 322 45 minutes later; a schedule adjustment has been implemented for flight C 306, such that flight C departs NYC 324 45 minutes later. In this example, the flight schedules 300 support: a connection for the origin NCE 320 and the destination NYC 324 by combining flight A 302 and flight B 304; a connection for the origin NCE 320 and the destination MAD 326 by combining flight A 302 and flight E 310.

Compared to the flight schedules 250 of FIG. 5A, the flight schedules 300 of FIG. 5B support a connection for the origin and destination pair NCE-NYC 320, 324 while removing support for the NYC-MAD 324, 326 origin and destination pair. As discussed previously, according to a connection value, in this example, the connection for the NCE-NYC origin and destination pair may have been determined to be more valuable than the NYC-MAD origin and destination pair. Furthermore, if for example, an operational constraint associated with the flight schedules 300 indicates that an aircraft will not be available for flight E 310 at CDG 322, some embodiments of the invention may remove flight E 310 if the schedule connection value for the schedules 300 is increased by removing flight E 310 such that the NCE-NYC origin and destination pair may be supported by the flight schedules 300.

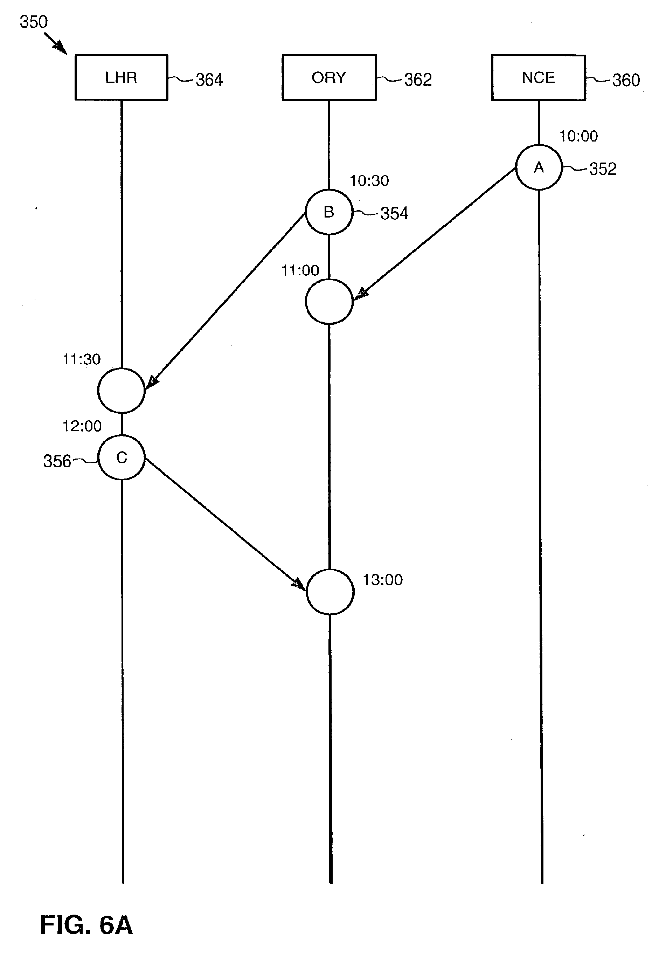

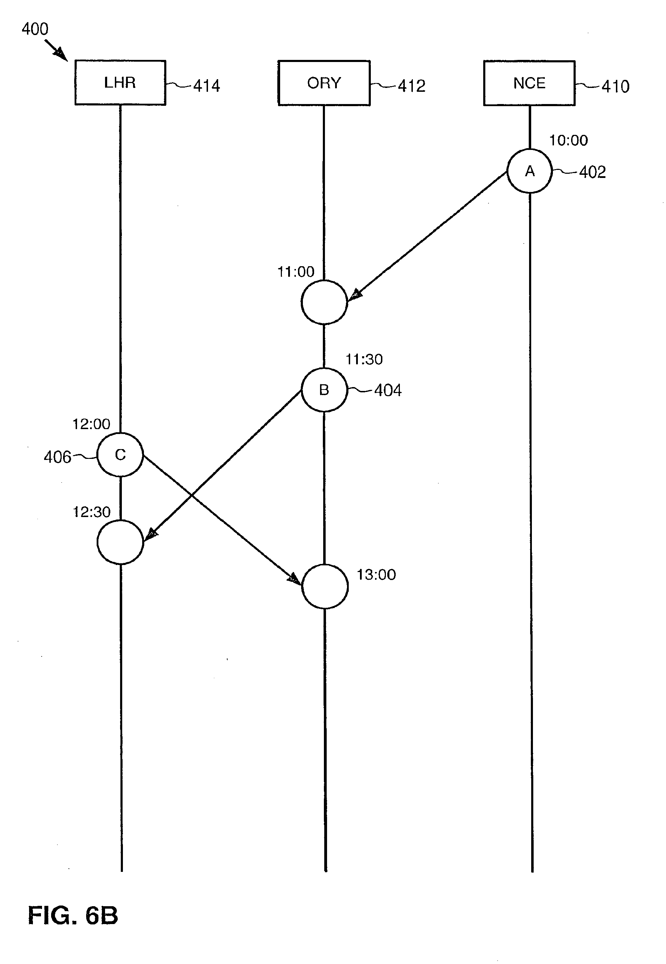

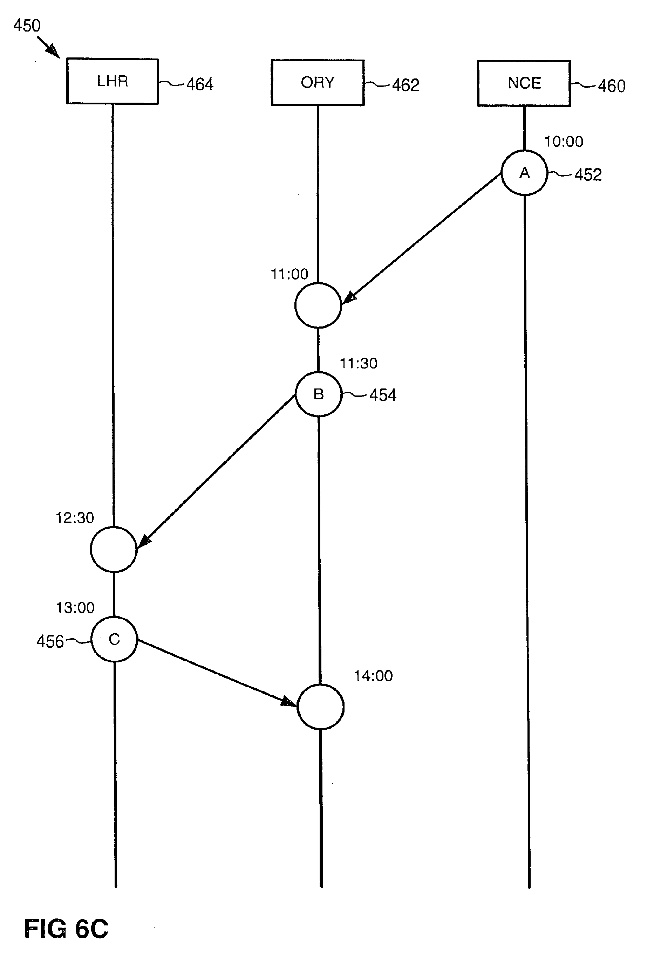

FIGS. 6A-C provide diagrammatic illustrations of example flight schedules, where FIGS. 6B and 6C are optimized schedules based on the flight schedule of FIG. 6A. FIG. 6A provides flight schedules 350 for three flights 352-356 - flight A 352 departs from NCE 360 at 10:00 and arrives at Orly, France (ORY) 362 at 11:00; flight B 354 departs ORY 362 at 10:30 and arrives at London, United Kingdom (LHR) 364 at 11:30; and flight C 356 departs LHR 364 at 12:00 and arrives at ORY at 13:00. FIG. 6B provides flight schedules 400 for three flights 402-406 -flight A 402 departs from NCE 410 at 10:00 and arrives at ORY 412 at 11:00; flight B 404 departs ORY 412 at 11:30 and arrives at LHR 414 at 12:30; and flight C 406 departs LHR 364 at 12:00 and arrives at ORY at 13:00. FIG. 6C provides flight schedules 450 for three flights 452-456 - flight A departs NCE 460 at 10:00 and arrives at ORY 462 at 11:00; flight B 454 departs ORY 412 at 11:30 and arrives at LHR 414 at 12:30; and flight C 406 departs LHR 464 at 13:00 and arrives at ORY at 14:00.

In the example provided in FIGS. 6A-C, a scheduling rule may indicate that a minimum connection time associated with the schedules is 30 minutes. Therefore, referring to FIGS. 6A and 6B, the flight schedule of flight B 354 for FIG. 6A is adjusted in FIG. 6B such that a connection for travel between an origin of NCE 410 and a destination of LHR 414 may be supported by the flight schedules 400 by combining flight A 402 and flight B 404. In particular, as compared to the flight schedule for flight B 354 of FIG. 6A, a schedule adjustment for flight B may be implemented such that the departure time of flight B is at least 30 minutes after the arrival time of flight A 402. Referring to FIGS. 6A and 6C, the flight schedules of flight B 454 and flight C 456 have been adjusted such that a connection for travel between an origin of NCE 460 and a destination of LHR 464 may be supported by the flight schedules 400 by combining flight A 402 and flight B 404. In this example, an operational constraint may indicate that the aircraft of flight B is needed for flight C. Consequently, a schedule adjustment for flight B may be implemented such that the departure time of flight B 454 is at least 30 minutes after the arrival time of flight A 452, and a schedule adjustment for flight C 456 may be implemented such that the departure time of flight C 456 is at least 30 minutes after the arrival time of flight B 452.

As illustrated in the examples and described herein, embodiments of the invention determine one or more schedule adjustments that may be implemented for schedules of a network of flights to increase a schedule connection value for the schedules. In some embodiments, a schedule adjustment may comprise a time adjustment for a departure time and/or arrival time of at least one flight, removal of at least one flight, and/or addition of at least one flight. In some embodiments, the schedule connection value may be maximized such that new and/or more valuable itineraries based on supported connections may be offered by travel providers. A schedule connection value may be based at least in part on a connection value for each connection offered, which in turn may be based at least in part on origin and destination pairs supported by the schedules. Generally, ranges of departure times and arrival times for flights of a network of flights (referred to as a time window) may be analyzed to determine a combination of departure and arrival times for all flights that maximizes connections and/or connection value while respecting scheduling rules and operational constraints. In some embodiments, flight schedules may be globally optimized such that a maximum number of connections are supported by the flight schedules. In some embodiments, flight schedules may be globally optimized such that a sum of connection values associated with connections supported by the flight schedules is maximized. Furthermore, in some embodiments of the invention, current/existing connections (i.e., connections supported prior to optimization) may not be broken - i.e., schedule adjustments may not remove an existing connection. In other embodiments, current/existing connections may be broken - i.e., schedule adjustments may remove an existing connection to maximize a schedule connection value of the flight schedules.

As discussed, embodiments of the invention globally optimize flight schedules for a network of flights to thereby increase connectivity of the schedule. In general, connections and/or connection values may be increased, and origin and destination pairs offered by the schedules may be increased to attract more passenger flow and/or higher revenue. For example, airline alliances may be considered in the optimization such that flight schedules for a first airline may be adjusted to align with flight schedules of partner airlines, such that connections supported by the airline alliance may be added. In these embodiments, a first flight for a connection may be provided by a first airline provider, and a second flight for the connection may be provided by a second airline provider. As another example, flight schedules for flights of a network of flights for an airline partnership/alliance may be adjusted to increase origin and destination offers associated with the partnership/alliance.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

The program code embodied in any of the applications/modules described herein is capable of being individually or collectively distributed as a program product in a variety of different forms. In particular, the program code may be distributed using a computer readable media, which may include computer readable storage media and communication media. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

These computer program instructions may also be stored in a computer readable medium that can direct a computer, other types of programmable data processing apparatus, or other devices to function in a particular manner, such that the instructions stored in the computer readable medium produce an article of manufacture including instructions that implement the function/act specified in the block or blocks of the flowchart and/or block diagram.

The computer program instructions may also be loaded onto a computer, other programmable data processing apparatus, or another device to cause a series of computations to be performed on the computer, the other processing apparatus, or the other device to produce a computer implemented process such that the executed instructions provide one or more processes for implementing the functions/acts specified in the flowchart and/or block diagram block or blocks.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While all of the present invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

**Claims**

1. A method for optimizing schedules of a plurality of flights in a network of flights, the method comprising:

   receiving the schedules that indicate an origin, a destination, a departure time, and an arrival time for each flight in the network of flights; and
   performing, with at least one processor, a global optimization of the schedules of the flights to identify a schedule adjustment for at least one of the flights that results in an increase in a schedule connection value associated with the schedules based at least in part on at least one scheduling rule that constrains combinability of the flights in the network of flights.

2. The method of claim 1, wherein the at least one scheduling rule that constrains combinability of the flights comprises a minimum connection time for an associated airport, a maximum connection time for an associated airport, a flight duration for at least one of the flights, a time adjustment window for at least one of the flights, or any combination thereof.

3. The method of claim 1 or claim 2, wherein the global optimization of the schedules of the flights is based at least in part on at least one operational constraint.

**4.** The method of claim 3, wherein the at least one operational constraint comprises a number of available aircraft for at least one associated airport, a total number of aircraft for an air travel provider associated with the flights, or any combination thereof.

**5.** The method of any of claims 1 to 4, wherein the schedule connection value is based at least in part on a connection value for each connection supported by the schedules of the flights.

**6.** The method of claim 5, wherein the connection value for each connection is based at least in part on a market size of an origin and destination pair associated with the connection.

**7.** The method of claim 5 or claim 6, wherein the connection value for each connection is equal.

**8.** The method of any of claims 1 to 7, wherein performing global optimization of the schedules of the network of flights comprises:

identifying at least one potential connection,
wherein identifying the at least one schedule adjustment is based at least in part on the at least one potential connection.

**9.** The method of claim 8, wherein the at least one potential connection is associated with a first flight and a second flight of the flights, and identifying the at least one potential connection is based at least in part on whether an arrival airport for the first flight corresponds to a departure airport for the second flight.

**10.** The method of claim 8 or claim 9, wherein the at least one potential connection is associated with a first flight and a second flight of the flights, and the first flight is provided by a first airline provider and the second flight is provided by a second airline provider.

**11.** The method of any of claims 1 to 10, wherein the global optimization of the schedules of the flights is performed such that connections supported prior to the global optimization remain supported after the global optimization.

**12.** The method of any of claims 1 to 11, wherein the global optimization of the schedules of the flights is performed such that at least one connection supported prior to the global optimization is not supported after the global optimization.

**13.** The method of any of claims 1 to 12, wherein the schedule adjustment for the at least one flight comprises cancellation of the at least one flight, adjustment of the departure time of the at least one flight, adjustment of the arrival time of the at least one flight, or any combination thereof.

**14.** A system for optimizing schedules of a plurality of flights in a network of flights comprising:

at least one processor; and
a memory coupled with the at least one processor, the memory including program code stored thereon and configured to be executed by the at least one processor to cause the at least one processor to perform the method of any of claims 1-13.

**15.** A computer program for optimizing schedules of a plurality of flights in a network of flights being configured, upon execution by at least one processor, to cause the at least one processor to perform the method of any of claims 1-13.

**FIG. 1**

100

RECEIVE SCHEDULES —102

PARSE SCHEDULES —104

DETERMINE SCHEDULE
CONNECTION VALUE —106

DETERMINE SCHEDULING
RULE(S) —108

DETERMINE OPERATIONAL
CONSTRAINT(S) —110

IDENTIFY POSSIBLE
CONNECTION(S) —112

DETERMINE SCHEDULE
ADJUSTMENT(S) TO INCREASE
SCHEDULE CONNECTION VALUE —114

GLOBALLY OPTIMIZE
SCHEDULES —116

# FIG. 2

150

FLIGHT
SCHEDULE(S) —152

DETERMINE SCHEDULING RULES
AND OPERATIONAL CONSTRAINTS —154

DETERMINE SCHEDULE
CONNECTION VALUE —156

IDENTIFY POSSIBLE CONNECTION
AND CORRESPONDING FLIGHTS —158

DETERMINE SCHEDULE
ADJUSTMENT(S) FOR AT LEAST
ONE CORRESPONDING FLIGHT —160

ADJUST SCHEDULE(S) —162

FIG. 3

FIG. 4

FIG. 5A

FIG. 5B

**FIG. 6A**

FIG. 6B

450

| LHR | —464
| ORY | —462
| NCE | —460

10:00

A ~452

11:00

11:30

B ~454

12:30

13:00

456~ C

14:00

**FIG 6C**

Europäisches
Patentamt
European
Patent Office
Office européen
des brevets

**EUROPEAN SEARCH REPORT**

Application Number

EP 14 29 0266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)<br><br>----- | | INV.<br>G06Q10/00 |

TECHNICAL FIELDS
SEARCHED (IPC)

G06Q

The present search report has been drawn up for all claims

| Place of search | Date of completion of the search | Examiner |
|---|---|---|
| Munich | 5 February 2015 | Anastasov, Yuliyan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)